# EUROPÄISCHE PATENTSCHRIFT

(11) **EP 0 444 453 B1**
(45) Veröffentlichungstag und Bekanntmachung des Hinweises auf die Patenterteilung: **18.01.1995**
(21) Anmeldenummer: 91101725.9
(22) Anmeldetag: 08.02.1991
(51) Int. Cl.: B23K 9/10

(54) **Verfahren zur Geräuschminderung bei WIG-Wechselstrom-Schweissmaschinen**
Noise reduction method for WIG-AC-welding machine
Méthode de diminution de bruit pour des appareils de soudage à courant alternatif WIG

(30) Priorität: 28.02.1990 DE 4006202
(43) Veröffentlichungstag der Anmeldung: 04.09.1991
(73) Patentinhaber: R e h m Schweisstechnik GmbH u. Co., 73066 Uhingen (DE)
(72) Erfinder: Bäurle, Klaus, W-7321 Wangen (DE); Maciaszczyk, Florian, W-7320 Göppingen (DE); Schuster, Wolfgang, W-7300 Esslingen (DE)
(74) Vertreter: Aldag, Wolfgang, Dipl.-Ing.

(56) Entgegenhaltungen:
- FR-A- 1 556 270
- GB-A- 2 090 705

## Beschreibung

Die Erfindung betrifft ein Verfahren zur Geräuschminderung und Stabilisierung des Schweißlichtbogens bei WIG-Wechselstrom-Schweißmaschinen mit selbstgeführten Inverter-Stromquellen, wobei die Wechselfrequenz des Schweißstromes in Abhängigkeit vom Betrag des aktuellen Schweißstromes verändert wird. Ein solches Verfahren ist aus der GB-A-2 090 705 bekannt.

WIG-Wechselstrom-Schweißmaschinen mit selbstgeführten Inverter-Stromquellen, wie sie z.B. aus der DE 31 50 510 A1 bekannt sind, ermöglichen es, die Wechselfrequenz des Schweißstromes wahlfrei vorzugeben. Durch schnelle Leistungshalbleiter, welche erst seit kurzem so verfügbar sind, ist diese Technik erst wirtschaftlich möglich geworden. Bei der Wahl der richtigen Wechselfrequenz gibt es folgende Gesichtspunkte:
Ein Gleichstrom-Schweißlichtbogen hat bei guter Stromgüte eine vernachlässigbare Schallabstrahlung. Beim Wechselstrom-Schweißen treten jedoch laufend Umpolungsvorgänge auf. Dabei wird der Strom zu Null und wächst in umgekehrter Polarität auf den alten Wert an. Einher damit geht eine Umpolung des Magnetfeldes, dem der Lichtbogen als ionisiertes Plasma ausgesetzt ist. Das Plasma bewegt sich in diesem Magnetfeld wie eine nahezu trägheitslose Membran in einem Lautsprecher und strahlt damit Geräusche ab. Bei großen Schweißströmen treten hohe Stromänderungsgeschwindigkeiten und damit starke magnetische Flußwechsel auf, dabei wird die Schallabstrahlung des ionisierten Schweißlichtbogens sehr groß. Weiter ist die absolute Stärke des abgestrahlten Lärms direkt proportional der Wechselfrequenz, weil solche lärmerzeugenden Umpolungsvorgänge entsprechend öfters stattfinden.

Untersuchungen mit Testpersonen haben ergeben, daß bei gegebenem Schweißstrom der subjektive Lärmpegel tatsächlich stark mit der Wechselfrequenz ansteigt und schon bei Frequenzen um 200 Hz als penetrant störend empfunden wird.

Es ist von diesem Gesichtspunkt her nicht ratsam, bei großem Schweißstrom, z.B. bei 250A oder größer, gleichzeitig mit hoher Frequenz, z.B. 150 Hz, zu arbeiten. Das war die Betrachtung aus der Sicht der Umweltbelastung. Betrachtet werden muß aber auch die Qualität des Lichtbogens.

Von modernen Maschinen wird erwartet, daß sie auch noch im Bereich von einigen wenigen Ampère gute Schweißergebnisse im Dünnblechbereich erzielen. Wechselstrom-Schweißmaschinen werden überwiegend zum Schweißen von Aluminium eingesetzt, das den großen Nachteil hat, daß sich auf der Oberfläche des Metalls eine hoch temperaturfeste Oxidschicht bildet. Diese Oxidhaut wird durch eine Umpolung des Schweißstromes zerstört, aber auch durch den Einsatz eines Hockspannungs-Zündgerätes, das mit seinen kurzen, aber energiereichen Impulsen die Oxidhaut durchschlägt. Bei kleinem Schweißstrom ist die in den Lichtbogen eingebrachte Energiemenge vergleichsweise gering. Es zeigt sich nun bei Versuchen, daß beim Schweißen mit niedrigen Strömen die Wahl einer hohen Wechselfrequenz vorteilhaft ist. Die häufigeren Polaritätswechsel beeinflussen den Lichtbogen und die Reinigung der Aluminium-Oberfläche in guter Weise. Bei hohen Strömen ist im Lichtbogen so viel Energie enthalten, daß dieser Aspekt keine Bedeutung hat.

Stand der Technik ist es im Moment, daß die Schweißmaschine einen Stufenschalter oder ein Potentiometer besitzt, mit dem der Benutzer die Wechselfrequenz vorwählen kann.

Diese Lösung hat aber einige Nachteile. Denn der Anwender muß nun mit jedem Wechsel des vorgewählten Stromes gleichzeitig die Frequenz verstellen, wobei oft weniger qualifizierte Kräfte die zugrundeliegenden Zusammenhänge gar nicht kennen und eventuell längere Zeit mit einer unvorteilhaften Einstellung arbeiten. Des weiteren ist der Schweißstrom bei einer WIG-Maschine keine konstante Größe, sondern ändert sich im Normalbetrieb laufend. Zu Beginn gibt es eine Anstiegsrampe, d.h. der Strom fängt klein, z.B. bei 20 % des Endwertes an und steigt in einer vorwählbaren Zeit auf den Endwert an. Genauso gibt es eine Absenkrampe von z .B. 4 Sekunden am Ende des Schweißens. Auch bieten die Maschinen die Möglichkeit des Pulsens. Das bedeutet, daß der Schweißstrom in einstellbaren Zeitintervallen zwischen dem Dachwert und einem einstellbaren niedrigeren Wert - z.B. 40 % davon - umgeschaltet wird. Wenn der Benutzer wie meist noch mit einem Fußpedal arbeitet, kann er individuell den Strom regulieren.

Folglich trägt die feste Einstellung der Wechselfrequenz mit einem separaten Knopf in keiner Weise dem sich laufend verändernden Stromwert Rechnung.

Die Erfindung stellt sich die Aufgabe, die Einstellung der Wechselfrequenz zu automatisieren und damit folgende Vorteile zu erreichen:
- eine höhere Bedienerfreundlichkeit, denn die Bedienung eines zusätzlichen Knopfes entfällt,
- bessere Schweißergebnisse, denn die Frequenz ist immer optimal an den Schweißstrom angepaßt und
- minimierte Geräuschbelastung durch Reduzierung der Frequenz bei hohen Strömen.

Diese Aufgabe wird nach der Erfindung auf die Weise gelöst, daß die Wechselfrequenz des Schweißstromes in inverser Weise zum Betrag des aktuellen Schweißstromes gesteuert wird, so daß bei großem Strom eine niedrige und bei kleinem Strom eine hohe Frequenz kommandiert wird. Dieses Verfahren hat außerdem einen unerwarteten hilfreichen Nebeneffekt, der von den Bedienern sehr geschätzt wird: da die Frequenz nun in direktem Zusammenhang mit der aktuellen Stromstärke steht, kann der Bediener an der Frequenz die Große des Stromes erkennen. Dieses 'akustische Ampèremeter' gibt zusätzliche Bedienungssicherheit, und hilft z.B. sehr beim Pulsen oder bei den Rampen, da man besser abschätzen kann, wie lange die Rampenzeiten oder Pulszeiten noch dauern.

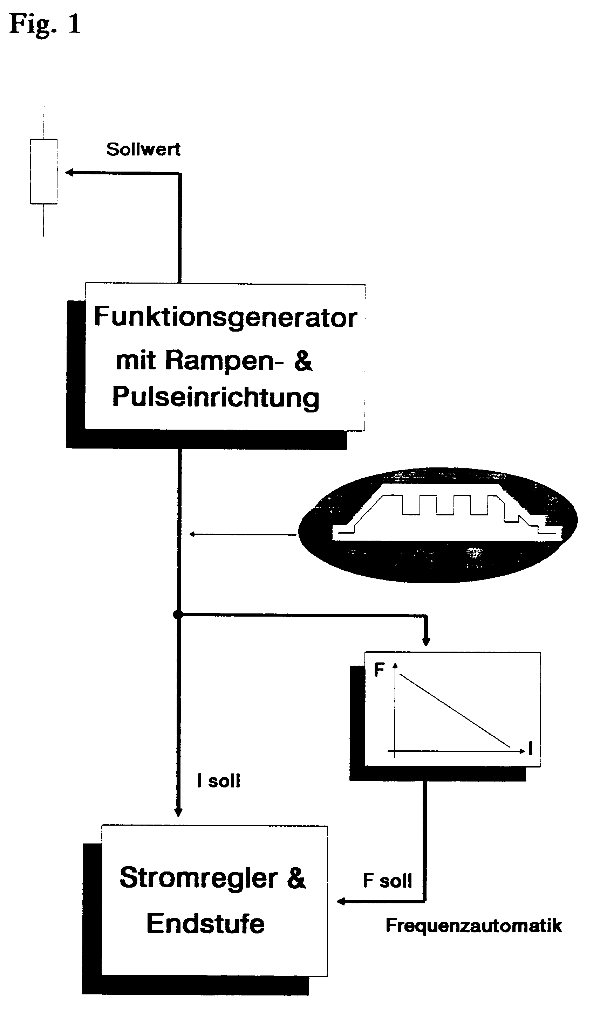

Fig. 1 zeigt die prinzipielle Anordnung nach der Erfindung. Der einstellbare Stromsollwert, der z.B. mit einem Potentiometer eingestellt wird, durchläuft einen Funktionsgenerator, durch den die typische Kurvenform des WIG-Schweißens erzeugt wird. Dabei werden die Rampen am Anfang und Ende eingefügt und auch die Pulsfunktionen realisiert. Das ovale Bild zeigt diesen typischen Stromverlauf über der Zeit. Dies ist nun der Sollwert für den Stromregler, der dann die Leistungsendstufe steuert. Die Endstufe hat nun einen zweiten Eingang für die Wechselfrequenz, mit der der Schweißstrom umgepolt wird. Anstatt hier nun ein Potentiometer anzuschließen, wird über eine mit bekannten Mitteln aufgebaute Schaltung eine Spannung erzeugt, welche invers zu der des Sollwertes verläuft, wie das F/I-Diagramm der Fig. 1 zeigt. Damit ist die Funktion gegeben, daß bei großem Strom die Frequenz klein und bei kleinem Strom die Frequenz groß wird, und zwar entsprechend dem aktuellen Schweißstrom.

## Patentansprüche

1. Verfahren zur Geräuschminderung und Stabilisierung des Schweißlichtbogens bei WIG-Wechselstrom-Schweißmaschinen mit selbstgeführten Inverter-Stromquellen, wobei die Wechselfrequenz des Schweißstromes in Abhängigkeit vom Betrag des aktuellen Schweißstromes verändert wird,
dadurch gekennzeichnet,
daß die Wechselfrequenz des Schweißstromes in inverser Weise zum Betrag des aktuellen Schweißstromes gesteuert wird, so daß bei großem Strom eine niedrige und bei kleinem Strom eine hohe Frequenz kommandiert wird.

## Claims

1. Method for noise reduction and stabilization of the welding arc for WIG-AC-welding machines with self-controlled inverter current sources, the frequency of the welding current being changeable dependent on the amount of the relevant welding current, characterized in that the frequency of the welding current is controlled dependent on the amount of the relevant welding current in an inverse way so that for a large current a low frequency and for a small current a high frequency is commanded.

## Revendications

1. Méthode pour diminuer le bruit et pour la stabilisation de l'arc électrique à souder pour des appareils de soudage TIG à courant alternatif avec des sources de courant à convertisseur de fréquence auto-commandées, dans laquelle la fréquence alternative du courant de soudage est modifiée en fonction de l'intensité du courant de soudage instantané,
caractérisée en ce que
la fréquence alternative du courant de soudage est commandée en fonction inverse à l'intensité du courant de soudage instantané, de telle sorte que pour une intensité élevée il est réglé une fréquence faible et que pour une intensité faible il est réglé une fréquence élevée.
